# EUROPEAN PATENT SPECIFICATION

(11) **EP 3 601 092 B1**
(45) Date of publication and mention of the grant of the patent: **09.06.2021**
(21) Application number: 18712683.4
(22) Date of filing: 20.03.2018
(51) Int. Cl.: B65D 77/22

(54) **ADHESIVE VALVE, SHEET, LAMINATED MATERIAL AND FOOD CONTAINER, AS WELL AS A PROCESS FOR MANUFACTURING THIS SHEET OR LAMINATED MATERIAL**
KLEBEVENTIL, FOLIE, LAMINIERTES MATERIAL UND LEBENSMITTELBEHÄLTER SOWIE VERFAHREN ZUR HERSTELLUNG DIESER FOLIE ODER LAMINIERTEN MATERIALS
VALVE ADHÉSIVE, FEUILLE, MATÉRIAU STRATIFIÉ ET RÉCIPIENT ALIMENTAIRE, AINSI QUE PROCÉDÉ DE FABRICATION DE LADITE FEUILLE OU DUDIT MATÉRIAU STRATIFIÉ

(30) Priority: 21.03.2017 IT 201700031043
(43) Date of publication of application: 05.02.2020
(73) Proprietor: Masterpack S.p.A., 21020 Monvalle (VA) (IT)
(72) Inventor: BINDA, Valerio, 21020 Monvalle (VA) (IT)
(74) Representative: Concone, Emanuele
(86) International application number: PCT/IB2018/051845
(87) International publication number: WO 2018/172923

(56) References cited:
- EP-A1- 0 870 697
- EP-A1- 2 778 094
- WO-A1-2006/107974
- WO-A1-2015/111015

## Description

### TECHNICAL FIELD

The present description concerns an adhesive valve, in particular an adhesive and flexible valve which can be applied on incisions or openings made in hermetic containers, for example for food to be heated, in order to release gases which develop therein. The present disclosure also relates to a sheet, a laminated material and a food container comprising said adhesive valve, as well as a process for manufacturing this laminated sheet or material.

### FRAMEWORK OF THE DESCRIPTION

European patent 2275252 describes an adhesive valve which comprises a flexible label having at least one lower surface provided with adhesive, wherein a flexible membrane is applied to the lower surface of the flexible label, is completely covered by the flexible label and has a lower surface substantially non-adhesive. To act as a gas relief valve, one or more incisions are made in the flexible label straddling the geometric projection of the perimeter of the flexible membrane. In this known adhesive valve the gas flow rate of the vent is greatly influenced by the type of adhesive used to fix the valve to the container, so if the adhesive is too strong it is difficult for the label to rise at the incisions, whereas if it is too weak there is the risk that the valve does not correctly exercise its closing function.

To solve this technical problem publication WO 2015/111015 A1 describes a similar adhesive valve, in which the flexible membrane is always completely covered by the flexible label but is provided with incisions which intersect with incisions made in the flexible label.

The adhesive valves known from these publications, however, have a not entirely optimal functioning, that is a gas release greater or less than expected according to the size and shape of the flexible label and the flexible membrane, when they are pulled or bent, in particular due to the swelling or bending of the sheet on which they are applied.

Furthermore, such adhesive valves can be damaged easily because they are arranged outside the container.

WO 2006/107974 A1 discloses an adhesive valve comprising a flexible membrane which is applied to the upper surface of a flexible label and is provided with one or more tongue-shaped incisions. The flexible label has an incision forming an opening which connects its two surfaces at the flexible membrane. Since the flexible membrane opens outwardly and is not covered by the flexible label, said known valve has a completely different structure and operation from the valves of EP 2275252 and WO 2015/111015 A1, so that it cannot guarantee adequate gas tightness and protection against external agents.

### SUMMARY OF THE DESCRIPTION

The object of the present description is therefore to provide an adhesive valve free from such drawbacks. Said object is achieved with an adhesive valve, a sheet, a process, a laminated material and a container, the main characteristics of which are specified in the claims.

Thanks to its particular structure, the adhesive valve according to the present description can be arranged inside a container, so as to improve the airtightness, the gas venting capacity and the relative inviolability of the valve itself, especially if the adhesive valve it is inserted into a laminated material. The dimensions of the adhesive valve can be reduced by up to 50% with the same performance as traditional adhesive valves, so as to reduce the amount of material and improve the appearance of the final product.

Thanks to its particular convex portion, a sheet comprising the adhesive valve has a cavity which can house the portion of the flexible membrane which rises due to the pressure inside the container, so as to improve the effectiveness of the adhesive valve.

If a portion of the flexible membrane is not covered by the flexible label, the functionality of the adhesive valve is less affected by the effects caused by its deformation, for example by traction or bending.

Thanks to the particular dimensions and shapes of the flexible label, the flexible membrane and/or the relevant incisions, the effects of the possible deformation of the adhesive valve on its functionality are further limited.

The sheet and the laminated material according to the present description can moreover be manufactured with a relatively simple, economical and fast procedure.

### BRIEF DESCRIPTION OF THE DRAWINGS

Further advantages and characteristics of the adhesive valve, the sheet, the container and the process according to the present description will be clear to those skilled in the art from the following detailed and non-limiting description of some embodiments thereof with reference to the attached drawings wherein:
- Figure 1 shows a top view of a first embodiment of the adhesive valve arranged on a support;
- Figure 2 shows a bottom view of the adhesive valve of Figure 1 without the support;
- Figure 3 shows the enlarged section III-III of Figure 2;
- Figure 4 shows a top view of a second embodiment of the adhesive valve;
- Figure 5 shows a bottom view of the adhesive valve of Figure 4;
- Figure 6 shows a top view of a third embodiment of the adhesive valve;
- Figure 7 shows a bottom view of the adhesive valve of Figure 6;
- figure 8 shows a top view of a fourth embodiment of the adhesive valve;
- Figure 9 shows a bottom view of the adhesive valve of Figure 8;
- Figure 10 shows a top view of the sheet comprising the first embodiment of the adhesive valve;
- Figure 11 shows a bottom view of the sheet of Figure 10;
- Figure 12 shows the enlarged section XII-XII of Figure 11;
- Figure 13 shows the sheet of Figure 12 during use;
- Figure 14 shows a laminated material comprising the sheet of Figure 12;
- Figure 15 shows a schematic view of the process for manufacturing the laminated material of Figure 14.

### EXEMPLARY EMBODIMENTS

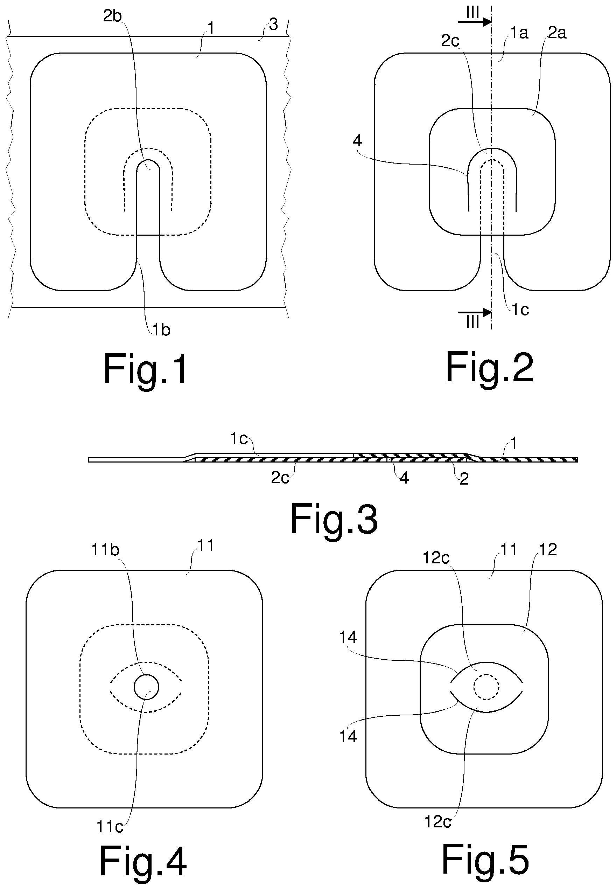

With reference to Figures 1 to 3, it is seen that the adhesive valve according to a first embodiment comprises, in a known manner, a flexible label 1 having at least one lower surface 1a provided with adhesive. At least one flexible membrane 2 is applied beneath the lower surface 1a of the flexible label 1 and in turn has a substantially non-adhesive lower surface 2a, i.e. that is not provided with adhesive or is substantially less adherent than the lower surface 1a of the label flexible 1 provided with adhesive. The flexible membrane 2 is preferably obtained by punching a support 3 of the same material, in sheet or strip, which has a larger extension than the flexible label 1 and on which one or more flexible labels 1 of the same type are applied, arranged on at least one row. Also the flexible label or labels 1 can be obtained by punching a sheet or a larger strip having a surface provided with adhesive, in which the exceeding part, i.e. the part not including the label or the labels 1, is removed after the application of the same on the support 3.

The flexible label 1 and the flexible membrane 2 may be obtained from a film of a plastic material suitable for coming into contact with food belonging in particular to the group consisting of polypropylene (for example, between 35 and 60 microns thick), polyester (for example, between 25 and 45 microns thick) or plastic materials with equivalent characteristics. The film of the flexible label 1 may be formed from a laminate of the same plastic materials and/or a polyamide film (for example, between 10 and 20 microns thick), or a PE-Evoh-PE laminate.

The lower surface 2a of the flexible membrane 2 is preferably treated with a material preferably compatible with a food use, which is suitable to make it non-adherent or limitedly adherent, in particular silicone or vaseline oil.

The adhesive layer applied to the lower surface 1a of the flexible label 1 may be a pressure-activated adhesive or PSA (Pressure Sensitive Adhesive), in particular an aqueous-based or UV cross-linking acrylic adhesive or an acrylic adhesive with an organic solvent, or a silicone-based adhesive for high temperatures (up to 250 °C).

Further characteristics of the materials and of the manufacturing process of the flexible label 1 and of the flexible membrane 2 are described in the European patent 2275252 and in the publication WO 2015/111015 A1.

The flexible label 1 may be shaped with a particular incision 1b such that at least one portion 2b of the upper surface of the flexible membrane 2 is not covered by the flexible label 1. In particular, at least one portion of the perimeter of the flexible label 1 passes above the flexible membrane 2, so that this portion of the perimeter divides the flexible membrane 2 in the portion 2b not covered by the flexible label 1 and in at least one remaining portion covered by the flexible label 1 (and delimited by a broken line in Figure 1). The surface area of the flexible membrane 2 covered by the flexible label 1 is preferably larger than the area of the surface of the flexible membrane 2 not covered by the flexible label 1. The flexible label 1 has a substantially polygonal and/or curvilinear shape, for example square with rounded corners. The flexible label 1 preferably extends over an area wide x mm and long y mm, with x and y between 20 and 30, in particular 25. The flexible membrane 2 has a substantially polygonal and/or curvilinear shape, for example square with the rounded corners. The perimeter of the flexible label 1 preferably has at least one concave portion 1c which acts as an opening, starts from an outer edge of the flexible label 1 and extends towards the inside of the flexible label 1. The opening 1c preferably comprises the portion of the perimeter of the flexible label 1 passing over the flexible membrane 2. The opening 1c preferably has an elongated shape, in particular substantially rectangular with rounded corners, i.e. similar to a tongue.

The flexible membrane 2 comprises at least one incision 4 which connects the two surfaces of the flexible membrane 2 and is covered by the flexible label 1. The incision 4 preferably has an arched shape and in particular forms in the flexible membrane 2 a tongue-shaped portion 2c which can be separated from the flexible label 1 while keeping the remaining portion of the flexible membrane 2 joined to the flexible label 1. The incision 4 may at least partially surround the opening 1c of the flexible label 1. The incision 4 in the flexible membrane 2 does not cross the incision 1b in the flexible label 1.

With reference to Figures 4 and 5, it is seen that in a second embodiment the flexible label 11 does not comprise a concave portion as in the first embodiment, but instead comprises an opening 11c which is arranged above the flexible membrane 12 and is obtained by cutting, for example with a circular incision 11b, the flexible label 11 and removing the portion delimited by this incision. The flexible membrane 12 therefore comprises a portion not covered by the flexible label 11 which corresponds to the opening 11c. In an alternative embodiment, the portion of the flexible label 11 delimited by the incision 11b may also not be removed, so that only the incision 11b connects the two surfaces of the flexible label 11.

The flexible membrane 12 comprises in this embodiment two or more incisions 14 which are covered by the flexible label 11. The incisions 14 preferably have an arcuate shape and in particular form in the flexible membrane 12 two tongue-shaped portions 12c which can be separated from the flexible label 11 while keeping the remaining portion of the flexible membrane 12 joined to the flexible label 11. The incisions 14 may at least partially surround the opening 11c of the flexible label 11. The incisions 14 in the flexible membrane 12 do not cross the incision 11b in the flexible label 11.

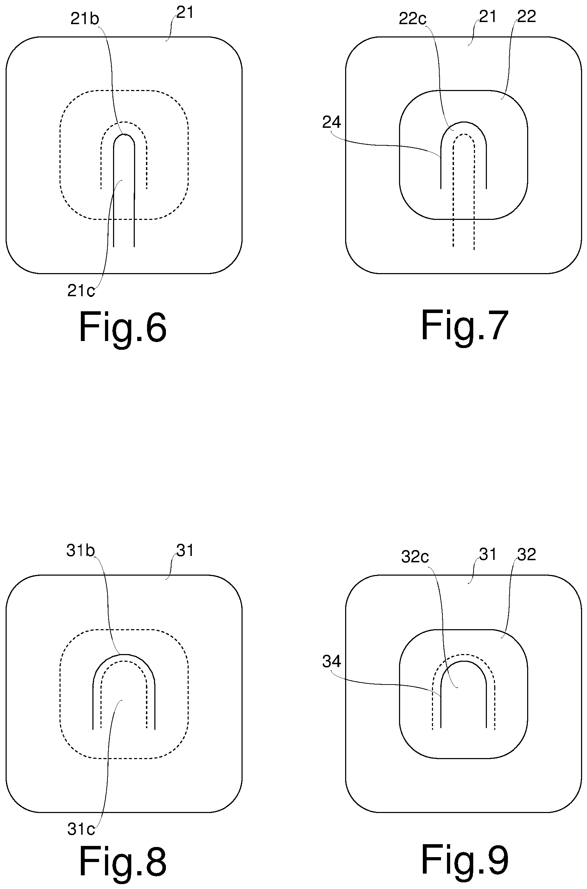

With reference to Figures 6 and 7, it is seen that in a third embodiment the flexible label 21 comprises only one incision 21b which is arranged at least partially above the flexible membrane 22 and which does not define an opening as in the first two embodiments .

The flexible membrane 22 comprises at least one incision 24 which is covered by the flexible label 21. The incision 24 in particular forms in the flexible membrane 22 a tongue-shaped portion 22c which can be separated from the flexible label 21 while keeping the remaining portion of the flexible membrane 22 joined connected to the flexible label 21. The incision 24 in the flexible membrane 22 can at least partially surround the incision 21b in the flexible label 21. The incision 21b in particular forms in the flexible label 21 a tongue-shaped portion 21c which can be separated from the flexible label 21 together with the tongue-shaped portion 22c of the flexible membrane 22. The incision 21b of the flexible label 21 may extend beyond the perimeter of the flexible membrane 22.

With reference to Figures 8 and 9, it is seen that in a fourth embodiment similar to the third embodiment, the flexible label 31 comprises at least one incision 31b which however is completely arranged above the flexible membrane 32.

The flexible membrane 32 comprises at least one incision 34 which is covered by the flexible label 31. The incision 34 in particular forms in the flexible membrane 32 a tongue-shaped portion 32c which can be separated from the flexible label 31 while keeping the remaining portion of the flexible membrane 32 joined to the flexible label 31. The incision 34 in the flexible membrane 32 is at least partially surrounded by the incision 31b in the flexible label 31. The incision 31b in particular forms in the flexible label 31 a tongue-shaped portion 31c which can be separated from the flexible label 31 together with the tongue-shaped portion 32c of the flexible membrane 32.

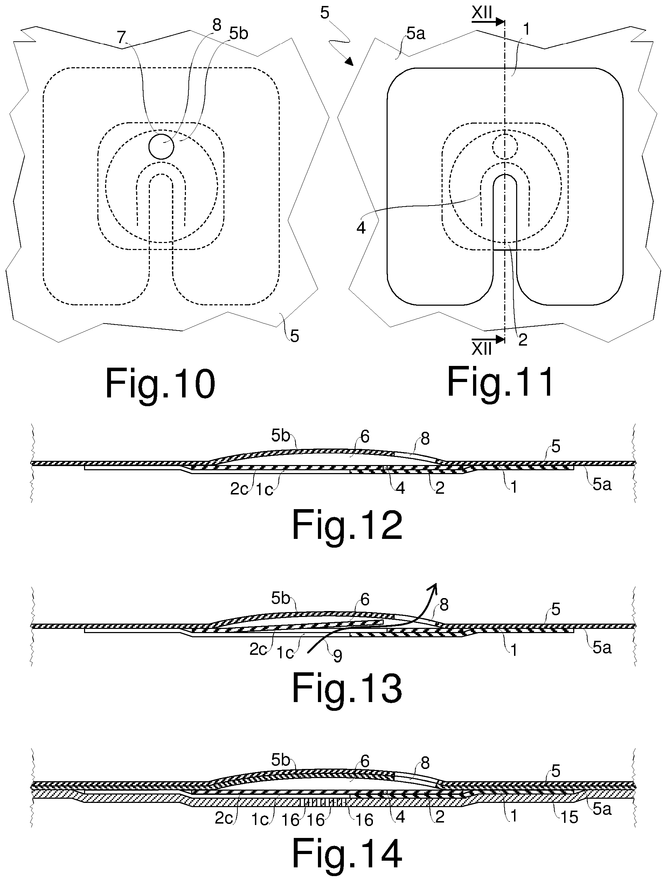

With reference to Figures 10 to 12, it is seen that the lower surface of the flexible label 1 can be joined to a surface 5a by means of the adhesive arranged between these surfaces, so that the flexible membrane 2 is arranged between the flexible label 1 and the surface 5a. The surface 5a is in particular the inner surface of a sheet 5 suitable for closing or forming a food container, for example a sheet of plastic material which can be used to make a bag or to be heat sealed to the edges of a rigid tray. Therefore, the flexible label 1 faces the inside of the container comprising the sheet 5. The sheet 5 preferably comprises at least one convex portion 5b facing outwards, namely facing the side opposite to the flexible label 1, so as to form a cavity 6 between the sheet 5 and the flexible membrane 2. The convex portion 5b has a shape of a spherical cap having a substantially circular extension preferably included in the perimeter of the flexible membrane 2. The diameter of the convex portion 5b is preferably comprised between 8 and 10 mm. At least one incision 7 is made in the convex portion 5b of the sheet 5, so as to connect the cavity 6 with the outside. The incision 7 in the sheet 5 may be closed, so that the portion of the sheet 5 surrounded by the incision 7 can be removed and form an opening 8. In an alternative embodiment the incision in the sheet 5 can be arched, in so as to form in the convex portion 5b a tongue-shaped portion which can bend outwards.

Referring to Figure 13, it can be seen that if in the container comprising the sheet 5 a pressure substantially greater than the pressure outside the container itself is generated, for example caused by cooking food in the container, the gases 9 in the container lift in the cavity 6 the tongue-shaped portion 2c of the flexible membrane 2, overcoming the force of the adhesive of the flexible label 1, so that these gases 9 pass out of the container through the opening 1c of the flexible label 1, the tongue-shaped portion 2c of the flexible membrane 2 and the opening 8 in the sheet 5. When the pressure in the container returns to be substantially equal to the external pressure, the tongue-shaped portion 2c of the flexible membrane 2 can again adhere to the flexible label 1, in particular thanks to electrostatic forces and/or Van der Waals forces that are created between the flexible membrane 2 and the flexible label 1. To improve the separation of the tongue-shaped portion 2c of the flexible membrane 2 from the flexible label 1, the adhesive applied between the tongue 2c and the flexible label 1 may be applied in smaller quantities and/or exert a lower adhesion with respect to the adhesive applied around the tongue 2c.

Figure 14 shows a further embodiment which consists of a laminated material in which the first sheet 5 is formed by an inner layer of metal, for example aluminum, coupled with an outer layer of plastic, for example polyester. Furthermore, a second sheet 15 preferably of plastic is applied inside, so that the flexible label 1 and the flexible membrane 2 are arranged between the first sheet 5 and the second sheet 15. The second sheet 15 has at least one incision, in particular a series of holes 16, at the opening 1c formed in the flexible label 1.

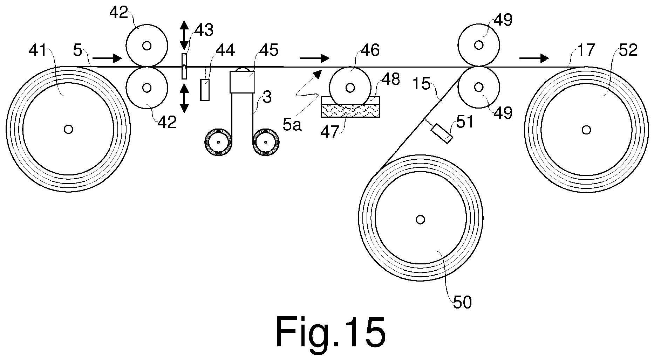

Referring to Figure 15, it is seen that in a first operating step of the manufacturing process according to the present description the first sheet 5 preferably wound on a first roller 41 is pulled in the direction of the arrows by one or more first auxiliary rollers 42, after which a punching machine 43, in particular a hot punching machine, forms in the sheet 5 the convex portion 5b facing upwards. If the sheet 5 comprises a single layer, the punching machine 43 can also form in the sheet 5 the opening 8 thanks to a perforating tip placed on the punch, otherwise, if the sheet 5 comprises several layers, it is preferable that the opening 8 is formed in the sheet 5 by a perforator 44, in particular a laser perforator, arranged before or after the punching machine 43. A labeling machine 45 withdraws from the support 3 and applies at least one adhesive valve according to the present description at the convex portion 5b of the sheet 5, with the lower surface 1a of the flexible label 1 in contact with the lower surface 5a of the sheet 5. An applicator roller 46 applies on the lower surface 5a of the sheet 5 an layer of adhesive 47 taken from a tank 48. Second auxiliary rollers 49 pull and they join together, by means of the adhesive 47, the first sheet 5 and the second sheet 15, which is wound on a second roller 50. A perforator 51, for example a laser perforator, makes one or more incisions or openings 16 in the second sheet 15 before the latter is joined to the first sheet 5. The laminated material 17 comprising the sheets 5, 15, as well as one or more adhesive valves according to the present description, is wound on a third roller 52.

In a subsequent step, not shown in the figures, the laminated material 17 can be taken from the third roller 52 and cut to obtain a plurality of sheets which comprise at least one adhesive valve and can be used to make enclosures for food use, for example as a cover of a container in which the second sheet 15 is joined to the edge of this container, in particular by means of adhesive or heat-sealing, whereas the first sheet 5 faces outwards.

Any variations or additions may be made by those skilled in the art to the embodiments described and illustrated herein while remaining within the scope of the following claims. In particular, further embodiments may include the technical characteristics of one of the following claims with the addition of one or more technical characteristics described in the text or illustrated in the drawings.

## Claims

1. Adhesive valve that comprises a flexible label (1; 11; 21; 31) having an upper surface and a lower surface (1a) which is provided with adhesive, wherein a flexible membrane (2; 12; 22; 32) is applied to the lower surface (1a) of the flexible label (1; 11; 21; 31) and has a substantially non-adhesive lower surface (2a), wherein the lower surface (1a) of the flexible label (1; 11; 21; 31) is suitable to be joined to a further surface (5a) by means of said adhesive so that the flexible membrane (2; 12; 22; 32) is arranged between the flexible label (1; 11; 21; 31) and this further surface (5a), wherein the flexible label (1; 11; 21; 31) has at least one incision (1b; 11b; 21b; 31b) that connects the two surfaces of the flexible label (1; 11; 21; 31) at the flexible membrane (2; 12; 22; 32), wherein at least one incision (4; 14; 24; 34) connects the two surfaces of the flexible membrane (2; 12; 22; 32) and is covered by the flexible label (1; 11; 21; 31), **characterized in that** the incision (4; 14; 24; 34) in the flexible membrane (2; 12; 22; 32) forms in the flexible membrane (2; 12; 22; 32) at least one tongue-shaped portion (2c; 12c; 22c; 32c).

2. Adhesive valve according to the preceding claim, **characterized in that** the incision (4; 14; 24; 34) in the flexible membrane (2; 12; 22; 32) surrounds at least partially the incision (1b; 11b; 21b; 31b) in the flexible label (1; 11; 21; 31).

3. Adhesive valve according to one of the preceding claims, **characterized in that** the incision (1b; 21b) in the flexible label (1; 21) extends beyond the perimeter of the flexible membrane (2; 22).

4. Adhesive valve according to one of the preceding claims, **characterized in that** the incision (21b; 31b) in the flexible label (21; 31) forms in the flexible label (21; 31) a tongue-shaped portion (21c; 31c) at the tongue-shaped portion (22c; 32c) of the flexible membrane (22; 32).

5. Adhesive valve according to one of the preceding claims, **characterized in that** the incision (1b; 11b) in the flexible label (1; 11) defines at least one opening (1c; 11c) in the flexible label (1; 11), so that at least one portion (2b) of the flexible membrane (2; 12) is not covered by the flexible label (1; 11).

6. Adhesive valve according to one of the preceding claims, **characterized in that** at least one portion of the perimeter of the flexible label (1) passes over the flexible membrane (2), so that this portion of the perimeter divides the flexible membrane (2) in at least one portion (2b) not covered by the flexible label (1) and in at least one portion covered by the flexible label (1).

7. Adhesive valve according to one of the preceding claims, **characterized in that** the incision (4; 14; 24; 34) in the flexible membrane (2; 12; 22; 32) does not cross the incision (1b; 11b; 21b; 31b) in the flexible label (1; 11; 21; 31).

8. Sheet (5) comprising at least one incision (7), **characterized in that** it comprises at least one adhesive valve according to one of claims 1 to 7, wherein the adhesive valve covers this incision (7).

9. Sheet (5) according to the preceding claim, **characterized in that** said incision (7) is formed in a convex portion (5b) of the sheet (5), which convex portion (5b) is arranged on the side opposite to the adhesive valve, so as to form a cavity (6) between the sheet (5) and the adhesive valve.

10. Process for manufacturing sheets (5), **characterized by** comprising the following operating steps:
- forming at least one convex portion (5b) comprising at least one incision (7) in at least one first sheet (5);
- applying at least one adhesive valve according to one of claims 1 to 7 to a surface (5a) of the first sheet (5), wherein the convex portion (5b) of the first sheet (5) is arranged on the side opposite to the adhesive valve, so as to form a cavity (6) between the first sheet (5) and the adhesive valve.

11. Sheet (5) according to claim 9 or process according to claim 10, **characterized in that** the extension of the convex portion (5b) of the sheet (5) is included in the perimeter of the flexible membrane of the adhesive valve.

12. Process according to claim 10 or 11, **characterized by** comprising the following further operating steps:
- forming at least one incision (16) in a second sheet (15);
- coupling the first sheet (5) with the second sheet (15), so that the adhesive valve is arranged between the first sheet (5) and the second sheet (15), wherein said incision (16) is arranged at the flexible label of the adhesive valve.

13. Process according to the preceding claim, **characterized in that** the first sheet (5) is coupled with the second sheet (15) by means of adhesive (47) applied to one surface (5a) of the first sheet (5) after the adhesive valve has been applied to the same surface (5a).

14. Laminate material (17), **characterized by** comprising a first sheet (5) according to one of claims 8, 9 or 11 coupled with a second sheet (15) so that the adhesive valve is arranged between the first sheet (5) and the second sheet (15), wherein the second sheet (15) has at least one incision (16) at the incision in the flexible label of the adhesive valve.

15. Container for food, **characterized by** comprising at least one adhesive valve according to one of claims 1 to 7 or a sheet (5) according to one of claims 8, 9 or 11 or a laminate material (17) according to claim 14.

16. Container according to the preceding claim, **characterized in that** the flexible label of the adhesive valve is arranged towards the inside of the container and the flexible membrane of the adhesive valve is arranged towards the outside of the container.

## Patentansprüche

1. Klebeventil, welches einen flexiblen Aufkleber (1; 11; 21; 31) umfasst mit einer Oberseite und mit einer Unterseite (1a), die mit einem Klebstoff versehen ist, wobei eine flexible Membran (2; 12; 22; 32) an der Unterseite (1a) des flexiblen Aufklebers (1; 11; 21; 31) appliziert ist und eine substantiell nicht klebende Unterseite (2a) aufweist, wobei die Unterseite (1a) des flexiblen Aufklebers (1; 11; 21; 31) dazu geeignet ist, mit einer weiteren Oberfläche (5a) mittels des besagten Klebstoffs verbunden zu werden, so dass die flexible Membran (2; 12; 22; 32) zwischen dem flexiblen Aufkleber (1; 11; 21; 31) und dieser weiteren Oberfläche (5a) angeordnet ist, wobei der flexible Aufkleber (1; 11; 21; 31) wenigstens einen Einschnitt (1b; 11b; 21b; 31b) aufweist, der die zwei Oberflächen des flexiblen Aufklebers (1; 11; 21; 31) auf der flexiblen Membran (2; 12; 22; 32) verbindet, wobei wenigstens ein Einschnitt (4; 14; 24; 34) die zwei Oberflächen der flexiblen Membran (2; 12; 22; 32) verbindet und von dem flexiblen Aufkleber (1; 11; 21; 31) bedeckt ist, **dadurch gekennzeichnet, dass** der Einschnitt (4; 14; 24; 34) in der flexiblen Membran (2; 12; 22; 32) wenigstens einen zungenförmigen Bereich (2c; 12c; 22c; 32c) in der flexiblen Membran (2; 12; 22; 32) bildet.

2. Klebeventil gemäß dem vorhergehenden Anspruch, **dadurch gekennzeichnet, dass** der Einschnitt (4; 14; 24; 34) in der flexiblen Membran (2; 12; 22; 32) den Einschnitt (1b; 11b; 21b; 31b) in dem flexiblen Aufkleber (1; 11; 21; 31) zumindest teilweise umgibt.

3. Klebeventil gemäß einem der vorhergehenden Ansprüche, **dadurch gekennzeichnet, dass** sich der Einschnitt (1b; 21b) in dem flexiblen Aufkleber (1; 21) jenseits des Umfangs der flexiblen Membran (2; 22) erstreckt.

4. Klebeventil gemäß einem der vorhergehenden Ansprüche, **dadurch gekennzeichnet, dass** der Einschnitt (1b; 31b) in dem flexiblen Aufkleber (21; 31) in dem flexiblen Aufkleber (21; 31) einen zungenförmigen Bereich (21c; 31c) an dem zungenförmigen Bereich (22c; 32c) der flexiblen Membran (22; 32) bildet.

5. Klebeventil gemäß einem der vorhergehenden Ansprüche, **dadurch gekennzeichnet, dass** der Einschnitt (1b; 11b) in dem flexiblen Aufkleber (1; 11) wenigstens eine Öffnung (1c; 11c) in dem flexiblen Aufkleber (1; 11) abgrenzt, so dass wenigstens ein Bereich (2c) der flexiblen Membran (2; 12) nicht von dem flexiblen Aufkleber (1; 11) bedeckt ist.

6. Klebeventil gemäß einem der vorhergehenden Ansprüche, **dadurch gekennzeichnet, dass** wenigstens ein Bereich des Umfangs des flexiblen Aufklebers (1) über die flexible Membran (2) verläuft, so dass dieser Bereich des Umfangs die flexible Membran (2) teilt in wenigstens einen Bereich (2b), der vom flexiblen Aufkleber (1) nicht bedeckt wird, und in wenigstens einen Bereich, der vom flexiblen Aufkleber (1) bedeckt wird.

7. Klebeventil gemäß einem der vorhergehenden Ansprüche, **dadurch gekennzeichnet, dass** der Einschnitt (4; 14; 24; 34) in der flexiblen Membran (2; 12; 22; 32) sich nicht mit dem Einschnitt (1b; 11b; 21b; 31b) in dem flexiblen Aufkleber (1; 11; 21; 31) kreuzt.

8. Folie (5), umfassend wenigstens einen Einschnitt (7), **dadurch gekennzeichnet, dass** sie wenigstens ein Klebeventil gemäß einem der Ansprüche 1 bis 7 aufweist, wobei das Klebeventil diesen Einschnitt (7) bedeckt.

9. Folie (5) gemäß dem vorhergehenden Anspruch, **dadurch gekennzeichnet, dass** der besagte Einschnitt (7) in einem konvexen Bereich (5b) der Folie (5) gebildet ist, welcher konvexe Bereich (5b) an der dem Klebeventil gegenüber liegenden Seite angeordnet ist, um einen Hohlraum (6) zwischen der Folie (5) und dem Klebeventil zu bilden.

10. Verfahren zur Herstellung von Folien (5), **gekennzeichnet durch** folgende Bearbeitungsschritte:
- Ausformen wenigstens eines konvexen Bereichs (5b), umfassend wenigstens einen Einschnitt (7) in wenigstens einer ersten Folie (5);
- Applizieren wenigstens eines Klebeventils gemäß einem der Ansprüche 1 bis 7 auf eine Oberfläche (5a) der ersten Folie (5), wobei der konvexe Bereich (5b) der ersten Folie (5) auf der dem Klebeventil gegenüber liegenden Seite angeordnet ist, um einen Hohlraum (6) zwischen der ersten Folie (5) und dem Klebeventil zu bilden.

11. Folie (5) gemäß Anspruch 9 oder Verfahren gemäß Anspruch 10, **dadurch gekennzeichnet, dass** die Erstreckung des konvexen Bereichs (5b) der Folie (5) in dem Umfang der flexiblen Membran des Klebeventils inbegriffen ist.

12. Verfahren gemäß Anspruch 10 oder 11, **gekennzeichnet durch** die folgenden zusätzlichen Bearbeitungsschritte:
- Bildung wenigstens eines Einschnittes (16) in einer zweiten Folie (15);
- Verbinden der ersten Folie (5) mit der zweiten Folie (15), so dass das Klebeventil zwischen der ersten Folie (5) und der zweiten Folie (15) angeordnet ist, wobei der besagte Einschnitt (16) an dem flexiblen Aufkleber des Klebeventils angeordnet ist.

13. Verfahren gemäß dem vorhergehenden Anspruch, **dadurch gekennzeichnet, dass** die erste Folie (5) mit der zweiten Folie (15) durch einen Klebstoff (47) verbunden ist, der auf eine Oberfläche (5a) der ersten Folie (5) appliziert wird, nachdem das Klebeventil auf die gleiche Oberfläche (5a) appliziert wurde.

14. Laminiertes Material (17), **gekennzeichnet durch** eine erste Folie (5) nach einem der Ansprüche 8, 9 oder 11, verbunden mit einer zweiten Folie (15), so dass das Klebeventil zwischen der ersten Folie (5) und der zweiten Folie (15) angeordnet ist, wobei die zweite Folie (15) wenigstens einen Einschnitt (16) an dem Einschnitt in dem flexiblen Aufkleber des Klebeventils aufweist.

15. Lebensmittelbehälter, **dadurch gekennzeichnet, dass** er wenigstens ein Klebeventil gemäß einem der Ansprüche 1 bis 7 oder eine Folie (5) gemäß einem der Ansprüche 8, 9 oder 11 oder ein laminiertes Material (17) gemäß Anspruch 14 aufweist.

16. Lebensmittelbehälter gemäß dem vorherigen Anspruch, **dadurch gekennzeichnet, dass** der flexible Aufkleber des Klebeventils zur Innenseite des Behälters hin gewandt ist, und dass die flexible Membran des Klebeventils zur Außenseite des Behälters hin gewandt ist.

## Revendications

1. Valve adhésive qui comprend une étiquette souple (1 ; 11 ; 21 ; 31) ayant une surface supérieure et une surface inférieure (1a) qui est prévue avec un adhésif, dans laquelle une membrane souple (2 ; 12 ; 22 ; 32) est appliquée sur la surface inférieure (1a) de l'étiquette souple (1 ; 11 ; 21 ; 31) et a une surface inférieure sensiblement non adhésive (2a), dans laquelle la surface inférieure (1a) de l'étiquette souple (1 ; 11 ; 21 ; 31) est appropriée pour être assemblée à une autre surface (5a) au moyen dudit adhésif de sorte que la membrane souple (2 ; 12 ; 22 ; 32) est agencée entre l'étiquette souple (1 ; 11 ; 21 ; 31) et cette autre surface (5a), dans laquelle l'étiquette souple (1 ; 11 ; 21 ; 31) a au moins une incision (1b ; 11b ; 21b ; 31b) qui raccorde les deux surfaces de l'étiquette souple (1 ; 11 ; 21 ; 31) au niveau de la membrane souple (2 ; 12 ; 22 ; 32), dans laquelle au moins une incision (4 ; 14 ; 24 ; 34) raccorde les deux surfaces de la membrane souple (2 ; 12 ; 22 ; 32) et est recouverte par l'étiquette souple (1 ; 11 ; 21 ; 31), **caractérisée en ce que** l'incision (4 ; 14 ; 24 ; 34) dans la membrane souple (2 ; 12 ; 22 ; 32) forme, dans la membrane souple (2 ; 12 ; 22 ; 32), au moins une partie en forme de languette (2c ; 12c ; 22c ; 32c).

2. Valve adhésive selon la revendication précédente, **caractérisée en ce que** l'incision (4 ; 14 ; 24 ; 34) dans la membrane souple (2 ; 12 ; 22 ; 32) entoure au moins partiellement l'incision (1b; 11b; 21b; 31b) dans l'étiquette souple (1 ; 11 ; 21 ; 31).

3. Valve adhésive selon l'une des revendications précédentes, **caractérisée en ce que** l'incision (1b ; 21b) dans l'étiquette souple (1 ; 21) s'étend au-delà du périmètre de la membrane souple (2 ; 22).

4. Valve adhésive selon l'une des revendications précédentes, **caractérisée en ce que** l'incision (21b ; 31b) dans l'étiquette souple (21 ; 31) forme, dans l'étiquette souple (21 ; 31), une partie en forme de languette (21c ; 31c) au niveau de la partie en forme de languette (22c ; 32c) de la membrane souple (22 ; 32).

5. Valve adhésive selon l'une des revendications précédentes, **caractérisée en ce que** l'incision (1b ; 11b) dans l'étiquette souple (1 ; 11) définit au moins une ouverture (1c ; 11c) dans l'étiquette souple (1 ; 11) de sorte qu'au moins une partie (2b) de la membrane souple (2 ; 12) n'est pas recouverte par l'étiquette souple (1 ; 11).

6. Valve adhésive selon l'une des revendications précédentes, **caractérisée en ce qu'**au moins une partie du périmètre de l'étiquette souple (1) passe sur la membrane souple (2), de sorte que cette partie du périmètre divise la membrane souple (2) en au moins une partie (2b) non recouverte par l'étiquette souple (1) et en au moins une partie recouverte par l'étiquette souple (1).

7. Valve adhésive selon l'une des revendications précédentes, **caractérisée en ce que** l'incision (4 ; 14 ; 24 ; 34) dans la membrane souple (2 ; 12 ; 22 ; 32) ne traverse pas l'incision (1b ; 11b; 21b; 31b) dans l'étiquette souple (1 ; 11 ; 21 ; 31).

8. Feuille (5) comprenant au moins une incision (7), **caractérisée en ce qu'**elle comprend au moins une valve adhésive selon l'une des revendications 1 à 7, dans laquelle la valve adhésive recouvre cette incision (7).

9. Feuille (5) selon la revendication précédente, **caractérisée en ce que** ladite incision (7) est formée dans une partie convexe (5b) de la feuille (5), laquelle partie convexe (5b) est agencée sur le côté opposé à la valve adhésive, afin de former une cavité (6) entre la feuille (5) et la valve adhésive.

10. Procédé pour fabriquer des feuilles (5), **caractérisé en ce qu'**il comprend les étapes suivantes :
former au moins une partie convexe (5b) comprenant au moins une incision (7) dans au moins une première feuille (5) ;
appliquer au moins une valve adhésive selon l'une des revendications 1 à 7, sur une surface (5a) de la première feuille (5), dans lequel la partie convexe (5b) de la première feuille (5) est agencée sur le côté opposé à la valve adhésive, afin de former une cavité (6) entre la première feuille (5) et la valve adhésive.

11. Feuille (5) selon la revendication 9 ou procédé selon la revendication 10, **caractérisé en ce que** l'extension de la partie convexe (5b) de la feuille (5) est incluse dans le périmètre de la membrane souple de la valve adhésive.

12. Procédé selon la revendication 10 ou 11, **caractérisé en ce qu'**il comprend les étapes suivantes supplémentaires :
former au moins une incision (16) dans une seconde feuille (15) ;
coupler la première feuille (5) avec la seconde feuille (15), de sorte que la valve adhésive est agencée entre la première feuille (5) et la seconde feuille (15), dans lequel ladite incision (16) est agencée au niveau de l'étiquette souple de la valve adhésive.

13. Procédé selon la revendication précédente, **caractérisé en ce que** la première feuille (5) est couplée avec la seconde feuille (15) au moyen de l'adhésif (47) appliqué sur une surface (5a) de la première feuille (5) après que la valve adhésive a été appliquée sur la même surface (5a).

14. Matériau stratifié (17) **caractérisé en ce qu'**il comprend une première feuille (5) selon l'une des revendications 8, 9 ou 11, couplée à une seconde feuille (15) de sorte que la valve adhésive est agencée entre la première feuille (5) et la seconde feuille (15), dans lequel la seconde feuille (15) a au moins une incision (16) au niveau de l'incision dans l'étiquette souple de la valve adhésive.

15. Récipient pour produit alimentaire, **caractérisé en ce qu'**il comprend au moins une valve adhésive selon l'une des revendications 1 à 7, ou une feuille (5) selon l'une des revendications 8, 9 ou 11, ou un matériau stratifié (17) selon la revendication 14.

16. Récipient selon la revendication précédente, **caractérisé en ce que** l'étiquette souple de la valve adhésive est agencée vers l'intérieur du récipient et la membrane souple de la valve adhésive est agencée vers l'extérieur du récipient.
